(19) Europäisches Patentamt
European Patent Office
Office européen des brevets

(11) **EP 3 686 173 A1**

(12) **EUROPÄISCHE PATENTANMELDUNG**

(43) Veröffentlichungstag:
**29.07.2020 Patentblatt 2020/31**

(21) Anmeldenummer: **20162009.3**

(22) Anmeldetag: **08.05.2015**

(51) Int Cl.:
**C04B 26/06** (2006.01) **C04B 20/00** (2006.01)
**C04B 41/48** (2006.01) **C04B 111/20** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**15723004.6 / 3 294 683**

(71) Anmelder: **STO SE & Co. KGaA**
**79780 Stühlingen (DE)**

(72) Erfinder:
- **Weier, Andreas**
  **78647 Trossingen (DE)**
- **Schaller, Christian**
  **73765 Neuhausen (DE)**

- **Weh, Walter**
  **78647 Trossingen (DE)**
- **Gerlach, Günter**
  **78183 Hüfingen (DE)**
- **Burgeth, Gerald**
  **79805 Eggingen (DE)**

(74) Vertreter: **Gottschalk, Matthias**
**Gottschalk Maiwald**
**Patentanwalts- und Rechtsanwalts- (Schweiz) GmbH**
**Splügenstrasse 8**
**8002 Zürich (CH)**

Bemerkungen:
Diese Anmeldung ist am 10-03-2020 als Teilanmeldung zu der unter INID-Code 62 erwähnten Anmeldung eingereicht worden.

(54) **ZUSAMMENSETZUNG ZUR OBERFLÄCHENBESCHICHTUNG**

(57) Die vorliegende Erfindung ist gerichtet auf eine Zusammensetzung enthaltend
- ein Wachs (W)
- ein Silikonöl (S)
- ein Bindemittel (B)
- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;
- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;
- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
jeweils bezogen auf den Feststoffanteil der Zusammensetzung
wobei
- PF1, PF2 und PF3 unterschiedlich sind,
sowie eine Beschichtung erhältlich aus dieser Zusammensetzung. Des weiteren ist die vorliegende Erfindung gerichtet auf die Verwendung der Erfindungsgemäßen Zusammensetzung als Form- oder Beschichtungsmasse.

EP 3 686 173 A1

**Beschreibung**

Die vorliegende Erfindung betrifft eine Zusammensetzung für Beschichtungen, insbesondere für Flächen die der Außenwitterung ausgesetzt sind, und eine Beschichtung erhältlich aus dieser Zusammensetzung.

Oberflächenbeschichtungen an Außenflächen sind in der Regel der Witterung, also Regen, Tau, etc. ausgesetzt. Eine schnelle Trocknung dieser Oberflächen ist erwünscht, da Feuchtigkeit auf und innerhalb der Oberfläche das Wachstum von beispielsweise Algen, Pilzen und anderen Mikroorganismen fördert. Die Trocknung erfolgt normalerweise durch Verdunsten und Ablaufen des Wassers, wobei je nach Art der Beschichtung einer dieser Trocknungsmechanismen vorherrscht. Die Trocknungseigenschaften einer Oberfläche werden auch allgemein Feuchtemanagement genannt.

In kommerziell erhältliche Beschichtungen kommt normalerweise eines der folgenden Prinzipien zur Anwendung
In der EP 0 546 421 sind sehr bzw. (hoch-)hydrophobe Beschichtungen beschrieben. Bei dieser Art von Beschichtung bildet Wasser einen hohen Kontaktwinkel zur Oberfläche aus, wodurch das Wasser, durch die Schwerkraft, als Tropfen abrollt. Bei Regen führen diese Beschichtungen in der Regel zu einer schnellen Trocknung. Bei Tau bilden sich jedoch durch die Kondensation bedingt häufig kleine Tropfen aus, die zu klein sind, um abzuperlen.

Im Falle von (super-)hydrophilen Beschichtungen weist Wasser einen sehr niedrigen Kontaktwinkel auf und die auf der Oberfläche befindlichen Wassertropfen bilden eine große Fläche auf der Oberfläche aus. Je nach Wassermenge und -ausbreitung der Wassertropfen kann sich ein Wasserfilm auf der Oberfläche bilden, wodurch eine Trocknung durch Verdunstung beschleunigt wird. Eine Trocknung derartiger Oberflächen beginnt jedoch normalerweise erst, wenn das Regen- oder Tauereignis etc. beendet ist. Zudem nimmt die Oberfläche bei derartigen Beschichtungen einen großen Teil der Feuchtigkeit auf, was unerwünscht ist, da beispielsweise die Wärmedämmung herabsetzt ist und der mikrobielle Bewuchs begünstigt wird.

Folglich besteht die Aufgabe der vorliegenden Erfindung darin, eine Zusammensetzung zur Beschichtung von Oberflächen zur Verfügung zu stellen, die ein verbessertes Feuchtemanagement aufweist, d.h. sowohl bei Regen als auch bei Tau zu einer verbesserten Rücktrocknung der Oberfläche führt. Die Zusammensetzung sollte auch bei geneigten, d.h. nicht senkrechten Oberflächen zu einer verbesserten Trocknung führen.

Das erfindungsgemäße Problem wurde gelöst durch eine Zusammensetzung enthaltend

- Wasser und/oder organische Lösemittel

- ein Wachs (W)

- ein Silikonöl (S)

- ein Bindemittel (B)

- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;

- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;

- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
  jeweils bezogen auf den Feststoffanteil der Zusammensetzung
  wobei

- PF1, PF2 und PF3 unterschiedlich sind.

Die erfindungsgemäße Zusammensetzung und die daraus resultierende Beschichtung weisen überraschenderweise ein verbessertes Feuchtemanagement auf.

Durch eine heterogene Größenverteilung der Pigmente und Füllstoffe würde der Fachmann an sich eine Oberflächenstruktur erwarten, die mehr Unregelmäßigkeiten und einen höheren Reibungskoeffizienten aufweist, da im Gegensatz zu einer homogenen Partikelgrößenverteilung in der alle Partikel (ungefähr) gleich groß sind, keine Anordnung der Partikel in einer Kugelpackung, ähnlich zu beispielsweise Salzkristallen etc., zu erwarten ist.

Bei unterkritischen Formulierungen, die in der vorliegenden Anmeldung bevorzugt sind, sind die Pigmente und Füllstoffe normalerweise vollständig vom Bindemittel umschlossen und somit treten direkte Wechselwirkungen der Partikeloberfläche mit Wasser und/oder Schmutzpartikeln nicht auf. Daher ist es umso erstaunlicher, dass die erfindungsgemäße Pigment-/Füllstoffkombination den Reibungskoeffizienten senkt, d.h. die Pigmente und Füllstoffe Auswirkungen auf die Oberflächeneigenschaften der Beschichtung haben, ohne dass die Oberflächen der Pigmente und Füllstoffe Teil der Oberfläche der Beschichtung sind.

Durch den mit der erfindungsgemäßen Zusammensetzung erhaltenen geringeren Reibungskoeffizienten, wird das rückstandsfreie Abgleiten verbessert, d.h. die gebildeten Wassertropfen gleiten bereits bei einer kleineren Größe ab und hinterlassen keine Wasserreste, beispielsweise Ablaufrinnen oder Ablaufbahnen.

Die erfindungsgemäße Pigment-/Füllstoffkombination zeichnet sich weiterhin dadurch aus, dass die Oberflächenenergie der Beschichtung kaum durch die Pigmente/Füllstoffe beeinflusst wird, insbesondere nicht stark ansteigt wie man üblicherweise durch die Zugabe von Pigmenten und Füllstoffen erwarten würde. Im Gegenteil, insbesondere der polare Anteil der Oberflächenenergie wird durch die erfindungsgemäße Füllstoffkombination deutlich herabgesetzt, was sich vorteilhaft auf das Abgleiten der Wassertropfen auswirkt.

Unterstützt wird dies zusätzlich durch die Verwendung von Wachs und Silikonöl. Wachse und Silikonöle senken bekanntlich den Reibungskoeffizienten der Oberfläche, so dass durch die Kombination mit den Pigmenten und Füllstoffen der vorliegenden Erfindung ein besonders niedriger Reibungskoeffizient erreicht werden kann.

Zudem wird unabhängig von theoretischen Betrachtungen angenommen, dass die erfindungsgemäße Zusammensetzung und die daraus resultierende Beschichtung zu einer unregelmäßigen Verteilung des Wachses und des Bindemittels an der Oberfläche führt, was eine Folge der Zugabe des Silikonöls zu sein scheint. Hierzu wurden EXAFS-Messungen durchgeführt, die Bereiche erhöhter Siliziumkonzentration zeigen, was die Theorie zu unterstützen scheint.

Auf der Oberfläche gebildete Wassertropfen befinden sich dann simultan auf Wachs-und silikonölreichen Bereichen der Oberfläche. Diese Bereiche weisen unterschiedliche Oberflächenenergien auf und folglich ein unterschiedliches Benetzungsverhalten. Aufgrund der unterschiedlichen Benetzungsverhalten dieser Bereiche wird davon ausgegangen, dass der Wassertropfen folglich versucht verschiedene Kontaktwinkel zur Oberfläche herzustellen, was vor allem im Übergang von Bereichen mit unterschiedlichem Benetzungsverhalten zu geringeren Oberflächenspannungen und folglich zu einer schnelleren Vereinigung der Tropfen was ein Ablaufen des Wassers beschleunigt.

Durch den geringeren Reibungskoeffizienten der Oberfläche ist die erforderliche Größe, ab der der Tropfen schwerkraftbedingt abläuft, verringert, d.h. das Trocknungsverhalten wird weiter verbessert. Dies führt insbesondere bei Tau zu einem verbesserten Feuchtemanagement.

Zudem sind durch die erfindungsgemäße Zusammensetzung, insbesondere den niedrigen Reibungskoeffizienten, chemische und/oder physikalische Wechselwirkungen von Schmutzpartikeln mit der Oberfläche im Vergleich zu Beschichtungen aus dem Stand der Technik deutlich verringert. Eine Anhaftung von unpolaren wie auch polaren Schmutzpartikeln ist somit erschwert. Sollten sie dennoch anhaften, werden sie leichter durch abrollende oder abfließende Wassertropfen entfernt, da die Wechselwirkungen mit der Oberfläche geringer sind und somit eine geringere Kraft ausreicht um sie von der Oberfläche zu entfernen.

Die erfindungsgemäße Füllstoffkombination wird im Folgenden näher beschrieben.

Die Gesamtmenge an Pigment(en) und/oder Füllstoff(en) aufweisend eine mittlere Teilchengröße von 0,10 bis 1,0 $\mu$m beträgt 8,0 bis 55 Gew.%, vorzugsweise 15 bis 50 Gew.%, stärker bevorzugt 20 bis 40 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF1).

Das eine oder die mehrerer Pigment(e) und/oder Füllstoff(e) (PF1) aufweisend eine mittlere Teilchengröße von 0,10 bis 1,0 $\mu$m ist/sind vorzugsweise ausgewählt aus Pigmente(n) und/oder Füllstoffe(n) aufweisend eine mittlere Teilchengröße von 0,15 bis 0,80 $\mu$m, stärker bevorzugt aufweisend eine mittlere Teilchengröße von 0,20 bis 0,60 $\mu$m.

Vorzugsweise weist PF1 eine Mohs-Härte von mindestens 3,0, stärker bevorzugt von mindestens 3,5 und insbesondere bevorzugt von 4,0 auf.

PF1 ist vorzugsweise ausgewählt aus Metall-oxiden oder Metall-sulfiden, wie beispielsweise $TiO_2$, ZnO oder ZnS, und/oder aus silikatischen Füllstoffen, wie beispielsweise Feldspat, Quarz, Cristobalit, Kieselgur und Kieselsäuren, stärker bevorzugt ist PF1 ist ausgewählt aus Metall-oxiden oder Metall-sulfiden, wie beispielsweise $TiO_2$, ZnO oder ZnS, insbesondere $TiO_2$.

Die Gesamtmenge an Pigment(en) und/oder Füllstoff(en) aufweisend eine mittlere Teilchengröße von größer als 1,0 bis 10 $\mu$m beträgt 5,0 bis 40 Gew.%, vorzugsweise 6,5 bis 35 Gew.%, stärker bevorzugt 8 bis 30 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF2).

Das eine oder die mehrerer Pigment(e) und/oder Füllstoff(e) (PF2) aufweisend eine mittlere Teilchengröße von größer als 1,0 bis 10 $\mu$m ist/sind vorzugsweise ausgewählt aus Pigmente(n) und/oder Füllstoffe(n) aufweisend eine mittlere Teilchengröße von 1,5 bis 9,0 $\mu$m, stärker bevorzugt aufweisend eine mittlere Teilchengröße von 2,0 bis 8,0 $\mu$m.

Üblicherweise weist PF2 eine Mohs-Härte von nicht mehr als 5,0 auf, vorzugsweise von nicht mehr als 4,0 auf und insbesondere bevorzugt von nicht mehr als 3,0 auf.

PF2 ist vorzugsweise ausgewählt aus Carbonaten oder Sulfaten, wie beispielsweise Erdalkalicarbonaten, Calcit, Kreide, Gips, Bariumsulfat, und/oder aus silikatischen Füllstoffen, insbesondere Schicht- und Ton-silikaten, wie beispielsweise Talkum, Kaolin und Glimmer-silikate und/oder aus Oxiden oder Hydroxyden, beispielsweise $Al(OH)_3$, stärker bevorzugt ist PF2 ausgewählt aus Carbonaten oder Sulfaten, wie beispielsweise Erdalkalicarbonaten, Calcit, Kreide, Gips, Bariumsulfat, insbesondere Calciumcarbonat.

Die Gesamtmenge an Pigment(en) und/oder Füllstoff(en) aufweisend eine mittlere Teilchengröße von größer als 10 bis 40 $\mu$m beträgt 3,0 bis 30 Gew.%, vorzugsweise 5,0 bis 25 Gew.%, stärker bevorzugt 7,0 bis 20 Gew.%, jeweils bezogen auf den Feststoffanteil der Zusammensetzung. Diese(s) Pigment(e) und/oder Füllstoff(e) enthalten, vorzugsweise bestehen aus Pigment(en) und/oder Füllstoff(en) (PF3).

Das eine oder die mehrerer Pigmente(s) und/oder Füllstoffe(s) (PF3) aufweisend eine mittlere Teilchengröße von größer als 10 bis 40 $\mu$m ist/sind vorzugsweise ausgewählt aus Pigmente(n) und/oder Füllstoffe(n) aufweisend eine mittlere Teilchengröße von größer als 10 bis 35 $\mu$m, stärker bevorzugt aufweisend eine mittlere Teilchengröße von größer als 10 bis 30 $\mu$m.

Üblicherweise weist PF3 eine Mohs-Härte von nicht mehr als 5,0 auf, vorzugsweise von nicht mehr als 4,0 auf und insbesondere bevorzugt von nicht mehr als 3,0 auf.

Vorzugsweise besteht PF3 aus anisotropen, beispielsweise lamellaren, stäbchen-oder plättchenförmigen Teilchen, d.h. die größte räumliche Ausdehnung der Teilchen ist wesentlich größer als die Ausdehnung in einer dazu orthogonal stehenden Richtung.

PF3 ist vorzugsweise ausgewählt aus Carbonaten oder Sulfaten, wie beispielsweise Erdalkalicarboanten, Calcit, Kreise, Gips, Bariumsulfat, und/oder aus silikatischen Füllstoffen, insbesondere Schicht- und Ton-silikaten, wie beispielsweise Talkum, Kaolin und Glimmer-silikate, /oder aus Oxiden oder Hydroxyden, beispielsweise $Al(OH)_3$, stärker bevorzugt ist PF3 ausgewählt aus Schicht- und Ton-silikaten, wie beispielsweise Talkum, Kaolin und Glimmer-silikate, insbesondere Schichtsilikaten, wie z.B. Talkum.

PF1, PF2 und PF3 sind unterschiedlich. Üblicherweise unterscheiden sich PF1, PF2 und PF3 untereinander jeweils bezüglich ihrer chemischen Zusammensetzung und/oder ihrer mittleren Teilchengröße, vorzugsweise unterscheiden sich PF1, PF2 und PF3 untereinander jeweils bezüglich ihrer chemischen Zusammensetzung und ihrer mittleren Teilchengröße

Durch die erfindungsgemäße Pigment-/Füllstoffkombination wird der Reibungskoeffizient der Oberflächen erhältlich aus der Zusammensetzung gemäß der vorliegenden Erfindung weiter gesenkt. Zusätzlich wird insbesondere der polare Anteil der Oberflächenenergien deutlich herabgesetzt wie oben im Detail ausgeführt.

Optional kann die erfindungsgemäße Zusammensetzung einen strukturgebenden Füllstoff enthalten. Durch den Einsatz eines strukturgebenden Füllstoffes erhält die Oberfläche eine Mikrostruktur wodurch der Reibungskoeffizient leicht erhöht wird. Jedoch fällt diese Erhöhung sehr gering aus, so dass das Ablaufverhalten des Wassers kaum beeinflusst wird. Auf glatten Oberflächen läuft oder rollt abfließendes Wasser häufig über einige wenige Bahnen ab. Hier kann es zu Ablagerungen entlang dieser Bahnen kommen. Durch die erzeugte Mikrostruktur wird ablaufendes Wasser in unterschiedliche Bahnen gelenkt, wodurch derartige Ablagerungen deutlich reduziert werden können bzw. verteilt werden, so dass eine Reinigung seltener erforderlich ist. Zudem können etwaige Ablagerungen bei Regen-/Tauereignisse etc. durch abfließende oder abrollende Wassertropfen besser wieder entfernt werden.

Sollte es zu einer geringfügigen Verschlechterung des Ablaufverhaltens kommen (sofern überhaupt eine Verschlechterung eintritt), wird dies durch die weiter verbesserten Selbstreinigungseigenschaften mehr als aufgewogen.

Der strukturgebende Füllstoff weist üblicherweise eine mittlere Teilchengröße von größer als 40 bis 160 $\mu$m, auf stärker bevorzugt von größer als 40 bis 150 $\mu$m noch stärker bevorzugt von 50 bis 100 $\mu$m auf.

Die strukturgebende Füllstoff, sofern vorhanden, ist vorzugsweise ein Leichtfüllstoff, üblicherweise aufweisend eine Schüttdichte von nicht mehr als 1,0 $kg/dm^3$, vorzugsweise nicht mehr als 0,60 $kg/dm^3$ und am stärksten bevorzugt nicht mehr als 0,30 $kg/dm^3$. Durch die Verwendung eines Leichtfüllstoffes kann die oben erwähnte Struktur mit einer geringen Masse an Füllstoff erreicht werden. Zudem "schwimmen" die Leichtfüllstoffe auf, d.h. bewegen sich bei und ggf. auch nach Auftragung zur Oberfläche der Beschichtung. So kann die oben erwähnte Struktur, falls gewünscht, mit einer geringeren Menge an Füllstoff erreicht werden. Die oben erwähnte Struktur kann jedoch auch mit einem Füllstoff mit höherer Schüttdichte erreicht werden.

Üblicherweise ist die Gesamtmenge an Pigmenten und Füllstoffen aufweisend eine mittlere Teilchengröße von größer als 40 $\mu$m bis 160 $\mu$m, bezogen auf den Feststoffanteil der Zusammensetzung, vorzugsweise 0,10 bis 6,0 Gew.-%, bevorzugter 0,20 bis 4,0 Gew.% und am stärksten bevorzugt 0,50 bis 3,0 Gew.%.

Die Gesamtheit an Pigmenten und Füllstoffen aufweisend eine mittlere Teilchengröße von größer als 40 $\mu$m bis 160 $\mu$m enthalten, vorzugsweise bestehen aus dem strukturgebenden Füllstoff.

Der strukturgebende Füllstoff sind beispielsweise Glaskugeln, insbesondere Halbhohlglaskugeln oder Hohlglaskugeln, Schaumglas, insbesondere geschlossenes Schaumglas, Perlite, insbesondere geschlossene Perlite, geblähte Vermiculite, insbesondere geschlossene geblähte Vermiculite vorzugsweise Glaskugeln, insbesondere Halbhohlglaskugeln oder Hohlglaskugeln und besonders bevorzugt Hohlglaskugeln.

Vorzugsweise ist der Gewichtsanteil an Pigment(en) und/oder Füllstoff(en) aufweisend eine mittlere Teilchengröße von 0,10 bis 1,0 $\mu$m größer als der Gewichtsanteil an Pigment(en) und/oder Füllstoff(en) aufweisend eine mittlere Teilchengröße von größer als 1,0 bis 10 μm und/oder, vorzugsweise und, ist der Gewichtsanteil an Pigment(en) und/oder Füllstoff(en) aufweisend eine mittlere Teilchengröße von größer als 1,0 bis 10 μm größer als der Gewichtsanteil an Pigment(en) und/oder Füllstoff(en) aufweisend eine mittlere Teilchengröße von größer als 10 bis 40 μm, jeweils bezogen auf den Feststoffanteil der Zusammensetzung.

Vorzugsweise ist folgende Relation (I) erfüllt

$$1{,}5 \cdot \text{mittlere Teilchengröße(PF1)}$$

$$< \text{mittlere Teilchengröße(PF2)} <$$

$$50 \cdot \text{mittlere Teilchengröße(PF1)} \qquad (I)$$

stärker bevorzugt ist folgende Relation (IA) erfüllt

$$4{,}0 \cdot \text{mittlere Teilchengröße(PF1)}$$

$$< \text{mittlere Teilchengröße(PF2)} <$$

$$30 \cdot \text{mittlere Teilchengröße(PF1)} \qquad (IA)$$

noch stärker bevorzugt ist folgende Relation (IB) erfüllt

$$7{,}0 \cdot \text{mittlere Teilchengröße(PF1)}$$

$$< \text{mittlere Teilchengröße(PF2)} <$$

$$20 \cdot \text{mittlere Teilchengröße(PF1)} \qquad (IB)$$

Vorzugsweise ist folgende Relation (II) erfüllt

$$1{,}5 \cdot \text{mittlere Teilchengröße(PF2)}$$

$$< \text{mittlere Teilchengröße(PF3)} <$$

$$40 \cdot \text{mittlere Teilchengröße(PF2)} \qquad (II)$$

stärker bevorzugt ist folgende Relation (IIA) erfüllt

$$4{,}0 \cdot \text{mittlere Teilchengröße(PF2)}$$

$$< \text{mittlere Teilchengröße(PF3)} <$$

$$30 \cdot \text{mittlere Teilchengröße(PF2)} \qquad (IIA)$$

noch stärker bevorzugt ist folgende Relation (IIB) erfüllt

$$7{,}0 \cdot \text{mittlere Teilchengröße(PF2)}$$

$$< \text{mittlere Teilchengröße(PF3)} <$$

$$20 \cdot \text{mittlere Teilchengröße(PF2)} \qquad (IIB)$$

Vorzugsweise ist folgende Relation (III) erfüllt

$$\frac{\text{mittlere Teilchengröße(PF3)}}{\text{mittlere Teilchengröße (strukturgebender Füllstoff)}} < 1 \qquad \text{(III)}$$

stärker bevorzugt ist folgende Relation (IIIA) erfüllt

$$\frac{1,4 \cdot \text{mittlere Teilchengröße(PF3)}}{\text{mittlere Teilchengröße (strukturgebender Füllstoff)}} < 1 \qquad \text{(IIIA)}$$

noch stärker bevorzugt ist folgende Relation (IIIB) erfüllt

$$\frac{1,8 \cdot \text{mittlere Teilchengröße(PF3)}}{\text{mittlere Teilchengröße (strukturgebender Füllstoff)}} < 1 \qquad \text{(IIIB)}$$

Neben den Pigmenten oder Füllstoffen PF1, PF2, PF3 und dem strukturgebendem Füllstoff, falls vorhanden, kann die Erfindungsgemäße Zusammensetzung weitere Pigmente und/oder Füllstoffe enthalten.

Die Menge an Pigmenten oder Füllstoffen, die sich von PF1, PF2 und PF3, inklusive ihrer bevorzugten Ausführungsformen, und strukturgebendem Füllstoff, falls vorhanden, inklusive seiner bevorzugten Ausführungsformen, unterscheiden ist vorzugsweise nicht mehr als 15 Gew.-%, stärker bevorzugt nicht mehr als 10 Gew.% bezogen auf den Feststoffanteil der Zusammensetzung.

Besonders bevorzugt ist die Menge an Pigmenten oder Füllstoffen, die sich von PF1, PF2 und PF3 in ihrer jeweiligen breitesten Ausführungsform gemäß der vorliegenden Erfindung, und dem strukturgebendem Füllstoff, falls vorhanden, in seiner breitesten Ausführungsform gemäß der vorliegenden Erfindung, unterscheiden vorzugsweise nicht mehr als 15 Gew.-%, stärker bevorzugt nicht mehr als 10 Gew.% bezogen auf den Feststoffanteil der Zusammensetzung.

Die erfindungsgemäße Zusammensetzung weist vorzugsweise eine Pigment-Volumen-Konzentration gemäß EN ISO 4618-1 von 20 % bis 65 %, stärker bevorzugt von 25 bis 60 % noch stärker bevorzugt von 30 bis 55 % auf.

In der vorliegenden Erfindung ist das Wachs üblicherweise hydrophober als das Bindemittel. D.h. der statische Anfangskontaktwinkel von Wasser nach 1 min Äquilibrieren des Wachses (W) ist normalerweise größer als der statische Anfangskontaktwinkel von Wasser des Bindemittels (B) nach 1 min Äquilibrieren.

Daher weist das das Wachs (W) vorzugsweise einen statischen Anfangskontaktwinkel von Wasser nach 1 min Äquilibrieren auf, der größer ist als der statische Anfangskontaktwinkel von Wasser des Bindemittels (B) nach 1 min Äquilibrieren, vorzugsweise weist das Wachs (W) einen statischen Anfangskontaktwinkel von Wasser nach 1 min Äquilibrieren auf, der mindestens 5°, bevorzugt mindestens 10°, höher ist als der statische Anfangskontaktwinkel von Wasser des Bindemittels (B) nach 1 min Äquilibrieren.

Die Methode zur Bestimmung des statischen Anfangskontaktwinkels ist im experimentellen Teil beschrieben.

In der vorliegenden Anmeldung bedeutet "hydrophob", dass der statische Anfangskontaktwinkel von Wasser nach 1 min Äquilibrieren > 90° ist.

In der vorliegenden Anmeldung bedeutet "hydrophil", dass der statische Anfangskontaktwinkel von Wasser nach 1 min Äquilibrieren ≤ 90° ist.

Das Wachs weist üblicherweise einen statischen Anfangskontaktwinkel von Wasser nach 1 min Äquilibrieren von mehr als 90°C auf und das Bindemittel weist üblicherweise einen statischen Anfangskontaktwinkel von Wasser nach 1 min Äquilibrieren von ≤ 90°, bevorzugter von ≤ 80° auf, stärker bevorzugt sind ≤ 75° auf.

Das Silikonöl weist vorzugsweise ebenfalls einen statischen Anfangskontaktwinkel von Wasser nach 1 min Äquilibrieren auf, der größer ist als der statische Anfangskontaktwinkel von Wasser des Bindemittels nach 1 min Äquilibrieren. Vorzugsweise ist der statische Anfangskontaktwinkel von Wasser nach 1 min Äquilibrieren des Silikonöls (S) mindestens 5°, bevorzugt mindestens 10° höher als der statische Anfangskontaktwinkel von Wasser des Bindemittels (B) nach 1 min Äquilibrieren.

Die Oberflächenenergie (OFE) besteht aus einem polaren und einem dispersiven Anteil.

Der polare Anteil der OFE des Bindemittels (B) beträgt vorzugsweise 2 bis 20 mN/m, stärker bevorzugt sind 4 bis 15 mN/m und/oder der dispersive Anteil der OFE des Bindemittels (B) beträgt vorzugsweise 20 bis 50 mN/m, stärker bevorzugt sind 28 bis 40 mN/m.

Die OFE des Bindemittels (B) beträgt vorzugsweise 22 bis 70 mN/m stärker bevorzugt sind 25 bis 50 mN/m, noch stärker bevorzugt sind 30 bis 45 mN/m.

Das Verhältnis zwischen polarem und dispersivem Anteil der Oberflächenenergie des Bindemittels (B) beträgt üblicherweise 10:90 bis 50:50, vorzugsweise 15:85 bis 50:50.

Der polare Anteil der OFE wird durch die Zugabe des Wachses (W) und/oder Silikonöles (S) reduziert.

Vorzugsweise senkt das Wachs (W) den polaren Anteil der OFE um mindestens 8 Prozentpunkte, vorzugsweise um mindestens 12 Prozentpunkte verglichen mit dem reinen Bindemittel (B).

Die Absenkung des polaren Anteils der OFE des Bindemittels durch die Zugabe des Wachses (W) und/oder Silikonöles (S) beträgt vorzugsweise mindestens 2 mN/m, stärker bevorzugt sind mindestens 4 mN/m, noch bevorzugter sind 6 mN/m.

Das Verhältnis zwischen polarem und dispersivem Anteil der Oberflächenenergie des Wachses (W) beträgt üblicherweise 10:90 bis 1:99, vorzugsweise 8:92 bis 1:99.

Vorzugsweise beträgt der polare Anteil der mittleren OFE des Wachses (W) 0,1 bis 6 mN/m, stärker bevorzugt sind 0,5 bis 4 mN/m.

Der dispersive Anteil der mittleren OFE des Wachses (W) beträgt vorzugsweise 22 bis 52 mN/m, stärker bevorzugt sind 28 bis 48 mN/m.

Die mittlere OFE des Wachses (W) beträgt vorzugsweise 23 bis 58 mN/m, stärker bevorzugt sind 25 bis 50 mN/m, noch stärker bevorzugt sind 29 bis 38 mN/m.

Das Verhältnis zwischen polarem und dispersivem Anteil der Oberflächenenergie des Silikonöls (S) beträgt üblicherweise 8:92 bis 1:99, vorzugsweise 6:94 bis 1:99.

Vorzugsweise beträgt der polare Anteil der mittleren OFE des Silikonöls (S) 0,1 bis 5 mN/m, stärker bevorzugt sind 0,5 bis 3 mN/m.

Der dispersive Anteil der mittleren OFE des Silikonöls (S) beträgt vorzugsweise 25 bis 50 mN/m, stärker bevorzugt sind 30 bis 45 mN/m.

Die mittlere OFE des Silikonöls (S) beträgt vorzugsweise 20 bis 70 mN/m, stärker bevorzugt sind 26 bis 50 mN/m, noch stärker bevorzugt sind 30 bis 46 mN/m.

Wie oben erläutert scheint eine heterogene Verteilung des Silikonöls und des Wachses vorzuliegen wodurch sich auf der Oberfläche Bereiche mit hoher und niedriger OFE ergeben ausgedrückt durch unterschiedlich hohe oder niedrige polare und/oder dispersive Anteile der OFE. Vor allem der polare Anteil variiert stark.

Die Bereiche mit hoher OFE entsprechen normalerweise der OFE des Bindemittels und die Bereiche niedriger OFE entsprechen normalerweise der OFE des Wachses.

Die OFE der Zusammensetzung ist aus mindestens 5 Messwertpaaren (Wasser/Diiodmethan) gemittelt und stellt somit einen Durchschnittswert der OFE ("mittlere OFE") der Bereiche mit hoher OFE und der Bereiche mit niedriger OFE.

Durch die erfindungsgemäße Füllstoffkombination wird die Oberflächenenergie der Zusammensetzung weiter gesenkt. Insbesondere wird der polare Anteil der Oberflächenenergie gesenkt.

Die OFE der Zusammensetzung ist folglich vorzugsweise um mindestens 1,5 mN/m niedriger als die des Bindemittels (B), vorzugsweise um mindestens 3 mN/m niedriger als die des Bindemittels (B), stärker bevorzugt um mindestens 5 mN/m niedriger als die des Bindemittels (B).

Vorzugsweise beträgt der polare Anteil der mittleren OFE der Zusammensetzung 1 bis 10 mN/m, stärker bevorzugt sind 1 bis 6 mN/m, noch stärker bevorzugt 1 bis 5 mN/m.

Der polare Anteil der mittleren OFE der Zusammensetzung ist vorzugsweise mindestens 1 mN/m niedriger als der polare Anteil der mittleren OFE des Bindemittels (B), mehr bevorzugt mindestens 2 mN/m niedriger als der polare Anteil der mittleren OFE des Bindemittels (B), noch mehr bevorzugt mindestens 3 mN/m niedriger als der polare Anteil der mittleren OFE des Bindemittels (B).

Der dispersive Anteil der mittleren OFE der Zusammensetzung beträgt vorzugsweise 14 bis 59 mN/m, stärker bevorzugt sind 20 bis 50 mN/m, noch stärker bevorzugt sind 25 bis 40 mN/m.

Die mittlere OFE der Zusammensetzung beträgt vorzugsweise 15 bis 60 mN/m, stärker bevorzugt sind 20 bis 50 mN/m, noch stärker bevorzugt sind 23 bis 35 mN/m.

Das Verhältnis des dispersiven zu dem polaren Anteil der mittleren OFE der Zusammensetzung beträgt vorzugsweise 50:1 bis 1:1, stärker bevorzugt sind 40:1 bis 2:1, noch stärker bevorzugt 10:1 bis 5:1.

Die niedrige mittlere OFE der Zusammensetzung resultiert vor allem aus einem niedrigen polaren Anteil der OFE. Es ist bekannt, dass Silikonöl und Wachs üblicherweise die OFE senken, insbesondere deren polaren Anteil. Jedoch wird durch die erfindungsgemäße Pigment-/Füllstoffkombination der polare Anteil der Oberflächenenergie noch weiter gesenkt, was zu verbessertem Feuchtemanagement führt.

Das Bindemittel (B) kann als wasser- und lösemittelfreies Re-Dispersionspulver eingesetzt werden oder als wässrige und/oder lösemittelhaltige Polymerdispersion. Üblicherweise wird eine wässrige und/oder lösemittelhaltige Polymerdispersion verwendet. Die nichtwässrigen Lösemittel sind üblicherweise organische Lösemittel.

Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Die Zusammensetzung gemäß der vorliegenden Erfindung liegt üblicherweise als wässrige und/oder lösemittelhaltige Dispersion vor. Die Gesamtmenge an Wasser und Lösemitteln beträgt üblicherweise 20 bis 60 Gew.% bezogen auf die Gesamtmenge der Zusammensetzung.

Die Menge an zugesetztem Wasser oder organischem Lösemittel wird vom Fachmann je nach der beabsichtigen Anwendung ausgewählt. Bei Dispersionen an einer Mischung aus Wasser und den zuvor genannten organischen Lösemitteln beträgt der Wasseranteil vorzugsweise mehr als 50 Gew.% bezogen auf die Gesamtmasse von Wasser und organischem Lösemittel.

In einer bevorzugten Ausführungsform liegt eine wässrige Dispersion vor. Eine solche wässrige Dispersion kann geringe Mengen an organischen Lösemitteln enthalten die beispielsweise in den Edukten enthalten sind. Üblicherweise beträgt in diesem Fall deren Anteil nicht mehr als 5 Gew.% bezogen auf die Gesamtmenge der Zusammensetzung.

Solche organischen Lösemittel können aliphatische oder aromatische Kohlenwasserstoffe, beispielsweise Toluol, Alkohole Ester oder Ketone, sein, die als Lösemittel für Bindemittel und Lacke bekannt sind.

Das Bindemittel (B) enthält üblicherweise mindestens 60 Gew.% Kohlenstoff bezogen auf das Gesamtgewicht des Bindemittels (B). Derartige Bindemittel sind normalerweise aus organischen Monomeren aufgebaut, wie beispielsweise Monomeren enthaltend C-C-Doppelbindungen, Monomere die mittels Kondensation oder Additionsreaktionen polymerisiert werden können.

Geeignete Bindemittel bzw. Bindemittelpolymere sind solche auf Basis der Monomere Carbonsäurevinylester mit 3 bis 20 C-Atomen, beispielsweise Vinylacetat und Vinylpropionat, N-Vinylpyrrolidon und dessen Derivate, Vinylaromaten, beispielsweise Styrol und Derivate von Vinylaromaten, wie beispielsweise Derivate von Styrol, Vinylhalogeniden, ethylenisch ungesättigten Carbonsäuren, beispielsweise Acryl-und/oder Methacrylsäure, ethylenisch ungesättigten Carbonsäureestern, beispielsweise Acryl- und/oder Methacrylsäureester mit 1 bis 12 C-Atomen im Alkoholrest, ethylenisch ungesättigten Carbonsäureamiden oder ethylenisch ungesättigten Carbonsäureanhydriden, Säurestern wie Acrylamide und Acrylonitril, vorzugsweise in Form von Polymerdispersionen wie oben erläutert. Wasserverdünnbare Alkydpolymere, Kombinationen von (Meth)Acryl/Alkydpolymeren, Polyvinylalkohol und deren Mischungen können ebenfalls eingesetzt werden. Besonders bevorzugt wird hierbei auf Polymere und/oder Copolymere (nachfolgend auch kurz (Co)-Polymere genannt) auf (Meth)acrylatbasis, beispielsweise Acrylatbasis, zurückgegriffen. Bei (Co)-Polymeren auf (Meth)acrylatbasis soll es sich im Sinne der vorliegenden Erfindung um solche aus (Meth)acrylsäure und/oder (Meth)acrylsäureestern ((Meth)acrylaten) bzw. deren Mischungen handeln. Unter dem Begriff (Meth)acrylat bzw. (Meth)acrylsäure werden im der vorliegenden Erfindung sowohl Methacrylate bzw. Methacrylsäure als auch Arylate bzw. Acrylsäure bzw. deren jeweilige Mischungen bezeichnet. Bevorzugt wird auf Homopolymere der Acrylsäure und insbesondere auf Copolymere der Acrylsäure und deren Ester, insbesondere Alkylester, und/oder auf Homopolymere der Methacrylsäure und insbesondere Copolymere der Methacrylsäure und deren Ester und/oder Estern der Acrylsäure, insbesondere Alkylester, zurückgegriffen. Die genannten Copolymere der Acrylsäure mit Alkylacrylaten sind hierbei besonders bevorzugt. Besonders zweckmäßig ist somit der Einsatz von Copolymeren, die enthalten oder gebildet sind aus Methacrylsäure und/oder Acrylsäure und Estern der Methacrylsäure und/oder Estern der Acrylsäure. Unter den in diesem Abschnitt genannten Estern, insbesondere Alkylestern, sind die Methyl-, Ethyl, n-Propyl, i-Propyl, n-Butyl, i-Butyl-, t-Butyl, und/oder Hexylester, z.B. 2-Ethylhexylester, der (Meth)arcrylsäure, vorzugsweise der Acrylsäure, besonders geeignet.

Beispielhaft seien als geeignete Alkylester der Acrylsäure und der Methacrylsäure Methylacrylat, Ethylacrylat, Propylacrylat, Butylacrylat, 2-Ethylhexylacrylat, Methylmethacrylat, Ethylmethacrylat, Propylmethacrylat, n-Butylmethacrylat, t-Butylmethacrylat, isoButylmethacrylat, 2-Ethylhexylmethacrylat, Cyclohexylmethacrylat und Cyclohexylacrylat genannt. Diese Alkylester können selbstverständlich sowohl alleine als auch in Form einer Kombination von zwei oder mehreren Alkylestern verwendet werden. Zusätzlich oder anstelle können auch mit funktionellen Gruppen, beispielsweise mit Hydroxyl- oder mit Epoxgruppen funktionalisierte Alkylester der Acrylsäure und/oder der Methacrylsäure eingesetzt werden. Geeignete hydroxygruppenhaltige (Meth)acrylsäureester umfassen Hydroxymethylmethacrylat, Hydroxyethylacrylat, Hydroxypropylmethacrylat, Hydroxypropylacrylat, Hydroxybutylmethacrylat und Hydroxybutylacrylat. Diese Alkylester können sowohl alleine als auch in Kombination eingesetzt werden. Als epoxygruppenhaltige (Meth)acrylsäureester sei exemplarisch auf Glycidylmethacrylat und Glycidylacrylat verwiesen.

Zusätzlich können als Comonomere zu der Acrylsäure, der Methacrylsäure und/oder den Estern, insbesondere Alkylestern, der (Meth)acrylsäure weitere ungesättigte Monocarbonsäuren sowie deren Anhydride und/oder insbesondere ungesättigte Dicarbonsäuren eingesetzt werden. Als geeignete ungesättigte Dicarbonsäuren kommen zum Beispiel Maleinsäure, Fumarsäure, Itaconsäure und Citraconsäure sowie deren Halbester, beispielsweise mit C 1-C 12-Alkoholen in Betracht.

Hierbei sind wässrige Bindemitteldispersionen auf Basis von Acrylat-(co)-polymeren besonders geeignet. Daneben können auch wässrige Bindemitteldispersionen auf Basis von Vinylestern, z.B. Vinylacetat, Styrol, Styrolacrylaten, Butadien, Phenylacetylen und/oder Alkydharzsystemen sowie deren Copolymerisaten eingesetzt werden.

Der Anteil des Bindemittels (B), bezogen auf den Feststoffanteil der Zusammensetzung, beträgt vorzugsweise 10 bis 60 Gew.%, stärker bevorzugt sind 10 bis 50 und insbesondere bevorzugt 12 bis 45 Gew.% bezogen auf den Feststoffanteil der Zusammensetzung.

Zusätzlich kann die Erfindungsgemäße Zusammensetzung noch silikatische Bindemittel enthalten, beispielsweise Wasserglas.

Bevorzugtes Wasserglas ist in Wasser lösliches Wasserglas oder eine Lösung üblicherweise wässrige Lösung von Wasserglas. Vorzugsweise wird Lithium-, Natrium-, Kaliumwasserglas oder Mischungen hiervon eingesetzt.

Das Silikonöl (S) enthält üblicherweise vorwiegend unpolare Seitenketten, ist also unpolar.

Silikonöle (S) vorwiegend enthaltend Hydrocarbylseitenketten wie beispielsweise $C_1$ bis $C_{20}$ Hydrocarbylseitenketten sind bevorzugt. Besonders bevorzugt sind Silikonöle vorwiegend enthaltend Alkylseitenketten, z.B. $C_1$ bis $C_{20}$ Alkylseitenketten, wobei Alkylketten nicht mehr als 5 Kohlenstoffatome enthaltend insbesondere bevorzugt sind.

Verzweigte und lineare Polysiloxane mit methyl, ethyl oder propyl-seitenketten sind besonders bevorzugt.

"Vorwiegend unpolare Seitenketten", "vorwiegend Hydrocarbylseitenketten" bzw. "vorwiegend Alkylseitenketten" bedeutet, dass die Edukte die zur Herstellung der Silikonöle verwendet wurden keine polaren Seitenketten und/oder deren Vorläufer enthalten.

In einer bevorzugten Ausführungsform enthält das Silikonöl (S) ausschließlich Hydrocarbylseitenketten, noch bevorzugter ausschließlich Alkylseitenketten gemäß einer der o.g. Ausführungsformen.

Das Silikonöl (S) weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm$^{-1}$) festgestellt werden.

Vorzugsweise weist das Silikonöl (S) ein Molekulargewicht von 1000 bis 20000 g/mol auf, stärker bevorzugt sind 4000 bis 10000 g/mol.

Das Silikonöl (S) weist vorzugsweise eine Viskosität von 75 bis 135 mm$^2$/s auf, stärker bevorzugt sind 85 bis 125 mm$^2$/s.

Vorzugsweise enthält die Zusammensetzung nur Silikonöle, die die o.g. Eigenschaften oder deren bevorzugten Ausführungsformen aufweisen.

Die Menge des Silikonöls beträgt vorzugsweise 0,01 bis 2,0 Gew.%, stärker bevorzugt sind 0,10 bis 1,5 Gew.% stärker bevorzugt sind 0,15 bis 1,0 Gew.%, jeweils bezogen auf den Feststoffanteil der Zusammensetzung.

Die im Bereich der Anstrichstoffe verwendeten Silikonöle haben üblicherweise verlaufsfördernde Wirkung. Das in der vorliegenden Erfindung eingesetzte Silikonöl hat jedoch vorzugsweise keine verlaufsverbessernden Eigenschaften.

Das Wachs hat bevorzugt einen Schmelzbereich innerhalb des Bereiches von 50 und 150 °C, stärker bevorzugt 70 bis 140°C noch stärker bevorzugt 80 bis 120°C und am stärksten bevorzugt 90 bis 100°C. Üblicherweise ist das Wachs siliziumfrei.

Beispiele sind natürliche Wachse, z. B. Bienenwachs, Carnaubawachs und Paraffinwachse, und synthetische Wachse, wie Polyalkylenwachse, Polyamide, oxidierte Polyalkylenwachse, Wachse aus niedermolekularen Copolymeren von Ethylen und Acrylsäure bzw. Acrylaten. Besonders bevorzugt sind Polyethylen- oder Polyamidwachse oder Mischungen hiervon mit Paraffin und am stärksten bevorzugt sind Polyethylenwachse oder Mischungen hiervon mit Paraffin. Im Fall von mehr als einem Wachs beziehen sich Mengen und Temperaturangaben auf die Gesamtheit der Wachse.

Vorzugsweise beträgt die Menge des Wachses 0,10 bis 10 Gew.%, stärker bevorzugt sind 0,2 bis 5 Gew.%, jeweils bezogen auf den Feststoffanteil der Zusammensetzung.

Die Zusammensetzung kann des Weiteren bis zu 15,0 Gew.%, vorzugsweise bis zu 10,0 Gew.% bezogen auf den Feststoffanteil der Zusammensetzung an üblichen Additiven, z.B. rheologische Additive, Dispergiermitteln, Verdickern, Netzmittel, Filmbindehilfmittel, Biozide, Entschäumern, Fasern etc., enthalten.

Nach Auftragen der Beschichtung und Trocknen bei Raumtemperatur für 48 h beträgt das Verhältnis zwischen organischem Anteil der Beschichtung und dem anorganischen Anteil der Beschichtung vorzugsweise 1,50 bis 0,60, stärker bevorzugt sind 1,30 bis 0,80 und am stärksten bevorzugt sind 1,25 und 0,90. Die Nassschichtstärke die zu dieser Bestimmung verwendet wird ist üblicherweise 200 µm.

Die Zusammensetzung ist vorzugsweise eine Form- oder Beschichtungsmasse, stärker bevorzugt ist ein Anstrichmittel oder Putz.

Die Erfindung ist weiterhin gerichtet auf eine Beschichtung auf einer Substratoberfläche, die Beschichtung enthaltend

- ein Wachs (W)

- ein Silikonöl (S)

- ein Bindemittel (B)

- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;

- ein oder mehrere Pigment(e) und/oder Füllstoff(e) (PF2) aufweisend eine mittlere Teilchengröße von 1,0 bis 10 $\mu$m in einer Gesamtmenge von 5,0 bis 40 Gew.%;

- ein oder mehrere Pigment(e) und/oder Füllstoff(e) (PF3) aufweisend eine mittlere Teilchengröße von 10 bis 40 $\mu$m in einer Gesamtmenge von 3,0 bis 30 Gew.%;
  jeweils bezogen auf den Feststoffanteil der Beschichtung
  wobei

- PF1, PF2 und PF3 unterschiedlich sind.

Die Beschichtung auf der Substratoberfläche ist erhältlich durch Verwendung der erfindungsgemäßen Zusammensetzung.

Vorzugsweise weist die Beschichtung einen Reibungskoeffizienten von nicht mehr als 0,28 auf, stärker bevorzugt nicht mehr als 0,24 und am stärksten bevorzugt nicht mehr als 0,20. Die Methode zur Bestimmung des Reibungskoeffizienten ist im experimentellen Teil erläutert.

Durch den geringen Reibungskoeffzienten wird das Feuchtemanagement der aus der erfindungsgemäßen Zusammensetzung erhaltenen Beschichtungen deutlich verbessert wie oben ausgeführt.

Die bevorzugten Ausführungsformen der Zusammensetzung gemäß der Erfindung sind auch bevorzugte Ausführungsformen der Beschichtung gemäß der vorliegenden Erfindung und umgekehrt.

Das Substrat ist vorzugsweise eine Wand, stärker bevorzugt sind Außenflächen, die der Bewitterung ausgesetzt sind, z.B. Außenfassaden von Gebäuden.

Die Erfindung ist ferner auf die Verwendung der erfindungsgemäßen Zusammensetzung als Form- oder Beschichtungsmasse, vorzugsweise ist die Form-oder Beschichtungsmasse ein Anstrichmittel oder Putz ist.

Die bevorzugten Ausführungsformen der Zusammensetzung und der Beschichtung gemäß der Erfindung sind auch bevorzugte Ausführungsformen der Verwendung gemäß der vorliegenden Erfindung und umgekehrt.

Fig. 1 zeigt die Beschichtungsoberfläche einer erfindungsgemäßen Zusammensetzung zusätzlich enthaltend Hohlglaskugeln in 20-facher Vergrößerung (Lichtmikroskop)

Fig. 2 zeigt die Beschichtungsoberfläche einer erfindungsgemäßen Zusammensetzung zusätzlich enthaltend Hohlglaskugeln in 10-facher Vergrößerung (Lichtmikroskop)

MESSMETHODEN

Schmelzpunkt Wachs:

ISO EN 11357-3

Kontaktwinkel und Oberflächenenergie sowie deren polarer und dispersiver Anteil

Als Prüfsubstanzen für den Kontaktwinkel wurden Wasser und Diiodmethan verwendet. Die Tropfengröße war jeweils 2$\mu$l bis 4$\mu$l.

Da eine direkte Vermessung einer Wachsoberfläche u.U. nicht möglich ist, da das Wachs beim Aushärten auskristallisieren kann und somit eine Messung nicht möglich oder zu weich wurde eine Mischung von 3,85 Gew.% Wachs und 96,15 Gew.% des unten genannten Bindemittels bezogen auf den Feststoffanteil hergestellt und eine entsprechende Beschichtung erstellt. Die Kontaktwinkelmessungen erfolgten an dieser Oberfläche.

Silikonöle sind normalerweise viskose Flüssigkeiten und daher ist ebenfalls eine direkte Messung an deren Oberfläche normalerweise nicht möglich. Daher wurde eine Mischung aus 1,13 Gew.% Silikonöls bezogen und 98,87 Gew.% des unten genannten Bindemittels bezogen auf den Feststoffanteil hergestellt und eine entsprechende Beschichtung erstellt. Die Kontaktwinkelmessungen erfolgten an dieser Oberfläche.

Als Bindemittel wurde eine wässrige Dispersion basierend auf einem Copolymer aus Acryl- und Methacrylsäureestern aufweisend einen Festkörperanteil von 46 Gew.% eine Brookfieldviskosität von ca. 7000 mPa•s nach DIN EN ISO 2555 (Spindel 4; 20 Upm; 23°C), erhältlich als Mowilith LDM 7724 von Celanese verwendet.

Der statische Kontaktwinkel wurde nach 2 Tagen Trocknung bei 23 °C und 50 % relativer Luftfeuchtigkeit bestimmt. Nach Auftragen des Wassertropfens bzw. Diiodmethantropfens wird 60 sec abgewartet bevor die Messung erfolgt.

Die Bestimmung des Kontaktwinkels an der Dreiphasen-Berührungslinie zwischen Festkörper, Flüssigkeit und Gas erfolgt mit dem Kontaktwinkelmessgerät G1 der Firma Krüss. Auf jedem Prüfkörper werden jeweils mindestens fünf Tropfen an verschiedenen Stellen gemessen.

Die Bestimmung der Oberflächenenergie erfolgt nach der Methode von Owens-Wendt-Rabel-Kaeble wie folgt (Quelle Krüss AG).

Nach OWENS, WENDT, RABEL und KAELBLE lässt sich die Oberflächenspannung jeder Phase in einen polaren und einen dispersiven Anteil aufspalten:

$$\sigma_l = \sigma_l^P + \sigma_l^D \quad \text{(Gleichung 1)}$$

$$\sigma_s = \sigma_s^P + \sigma_s^D \quad \text{(Gleichung 2)}$$

OWENS und WENDT legten ihre Gleichung der Grenzflächenspannung

$$\gamma_{sl} = \sigma_s + \sigma_l - 2\left(\sqrt{\sigma_s^D \cdot \sigma_l^D} + \sqrt{\sigma_s^P \cdot \sigma_l^P}\right) \quad \text{(Gleichung 3)}$$

zugrunde und kombinierten sie mit der YOUNG-Gleichung

$$\sigma_s = \gamma_{sl} + \sigma_l \cdot \cos\theta \quad \text{(Gleichung 4)}$$

Die beiden Autoren lösten das Gleichungssystem mit Hilfe von Kontaktwinkeln zweier Flüssigkeiten mit bekanntem dispersiven und polaren Anteil der Oberflächenspannung. Die Gleichungen 3 und 4 werden kombiniert und die resultierende Gleichung durch Umstellung an die allgemeine Geradengleichung angepasst.

$$y = mx + b \quad \text{(Gleichung 5)}$$

Die angepasste Gleichung sieht folgendermaßen aus:

$$\underbrace{\frac{(1+\cos\theta)\cdot\sigma_l}{2\sqrt{\sigma_l^D}}}_{y} = \underbrace{\sqrt{\sigma_s^P}}_{m} \cdot \underbrace{\sqrt{\frac{\sigma_l^P}{\sigma_l^D}}}_{x} + \underbrace{\sqrt{\sigma_s^D}}_{b}$$

$$\text{(Gleichung 6)}$$

Bei einer linearen Regression der Auftragung von y gegen x ergibt sich $\sigma_s P$ aus dem Quadrat der Geradensteigung m und $\sigma_s D$ aus dem Quadrat des Ordinatenabschnitts b.

$$\frac{(1+\cos\theta)\cdot\sigma_l}{2\sqrt{\sigma_l^D}}$$

$$m=\sqrt{\sigma_s^P}$$

$$b=\sqrt{\sigma_s^D}$$

$$\sqrt{\sigma_l^P/\sigma_l^D}$$

Die Oberflächenenergien sind in mN/m angegeben.

Zunächst wurden Mischungen aus dem reinen, o.g. Bindemittel und dem in den unten beschriebenen Beispielen verwendeten Wachs und/oder Silikonöl untersucht.

Hierzu wurden die Zusammensetzungen aus Tabelle 1 mit 200 $\mu$m Nassschichtstärke aufgezogen und getrocknet wie oben ausgeführt und die Kontaktwinkel nach 3 min Äquilibrierungszeit des Tropfens auf der Oberfläche mit Wasser und Diiodmethan, die Oberflächenenergie (OFE), sowie der dispersive (DA) und polare Anteil (PA) der OFE bestimmt.

Die Mengenangaben in Tabelle 1 des PE-Wachses beziehen sich auf eine wässrige Dispersion mit einem Feststoffanteil von 35 Gew.% und die des Bindemittels auf eine wässrige Dispersion mit einem Festkörperanteil von 46 Gew.%. Das Silikonöl liegt als reine Verbindung vor.

| Tabelle 1 | Kontaktwinkel [°] | | OFE* | DA* | PA* | DA[%] | PA[%] | DA/PA |
|---|---|---|---|---|---|---|---|---|
| | Wasser | Diiodmethan | | | | | | |
| Bindemittel | 73,4 | 53,3 | 40,4 | 32,4 | 8,0 | 80,2 | 19,8 | 4,0 |
| Bindemittel + 5 Gew.% Wachs | 91,7 | 54,2 | 33,5 | 31,9 | 1,6 | 95,3 | 4,7 | 20,2 |
| Bindemittel + 0,5 Gew.% Silikonöl | 88,4 | 44,4 | 38,9 | 37,3 | 1,6 | 96,0 | 4,0 | 23,9 |
| Bindemittel + 4,5 Gew.% Wachs +0,5 Gew. Silikonöl | 89,3 | 47,4 | 37,3 | 35,7 | 1,6 | 95,8 | 4,2 | 22,8 |
| Bindemittel + 5 Gew.% Wachs +0,5 Gew. Silikonöl | 89,9 | 47,8 | 37,0 | 35,5 | 1,5 | 96,0 | 4,0 | 24,0 |
| * Einheit [mN/m] | | | | | | | | |

Erkennbar ist die deutliche Zunahme des Kontaktwinkels von Wasser bei Wachs und/oder Silikonölzugabe.

Pigment-Volumen-Konzentration

Die Pigment-Volumen-Konzentration (EN ISO 4618-1) gibt das Volumenverhältnis zwischen Pigmenten / Füllstoffen und dem Bindemittel im Beschichtungsfilm wieder.

Die ebenfalls in der Rezeptur enthaltenen Additive wurden in der Berechnung nicht berücksichtigt. Lösemittel und Wasser sind im gehärteten Film ohnehin nicht mehr enthalten und fallen damit ebenfalls weg. Das Wachs und Silikonöl, sofern vorhanden, wurde bei der Berechnung nicht berücksichtigt.

Viskosität Silikonöl

DIN 53015

FTIR (Abwesenheit der symmetrischen Si-O-C-Streckschwingung)

Die Messung wurde durchgeführt mit einem FTIR-Spektrometer Perkin-Elmer Spectrum 100 mit Universal ATR Accessory. Die Abwesenheit der symmetrischen Si-O-C-Streckschwingung bei 940 - 970 cm$^{-1}$ zeigt die Abwesenheit von Alkoxyseitenketten an.

Mittlere Teilchengröße

In der vorliegenden Anmeldung werden die Pigmente und Füllstoffe anhand ihrer mittleren Teilchengröße charakterisiert. Dies erfolgt durch Bestimmung der Partikelgrößenverteilung. Der Wert dx bedeutet hierbei den prozentualen Anteil (x) der Teilchen die einen Durchmesser kleiner als d haben. Dies bedeutet, dass der d20-Wert den Partikeldurchmesser darstellt bei dem 20 Gew.% aller Partikel kleiner ist. Der d50-Wert ist folglich der volumenmittlere Medianwert, d.h. 50 Vol.% aller Teilchen sind kleiner als diese Partikelgröße. In der vorliegenden Erfindung ist die Partikelgröße als volumenmittlere Medianwert d50 angegeben. Um den volumenmittleren Medianwert d50 zu ermitteln wurde ein Laserbeugungs-Partikelgrößenbestimmungsinstrument Mastersizer 3000 von der Firma Malvern Instruments Limited, U. K. verwendet. Die Methode und das Instrument sind dem Fachmann bekannt und werden routinemäßig eingesetzt um Partikelgrößen von Füllstoffe, Pigmenten und anderen partikelförmigen Materialien zu bestimmen.
Die Messung wird in Wasser durchgeführt. Die Probe wird mittels Hochgeschwindigkeitsrührer und Ultraschall dispergiert.
Die mittlere Teilchengröße entspricht dem d50-Wert.

Schüttdichte

Die Schüttdichte wird gemäß ISO 697 bestimmt.

Reibungskoeffizient

Der dynamische Reibungskoeffizient ($\mu_R$) wurde in Anlehnung an ISO 8295:1995 und ASTM D1894-11 bestimmt. Ein Altek Slip tester wurde verwendet. Ein Film mit einer Nassschichtstärke von 200 $\mu$m Dicke wurde auf Lenetta-Folie erstellt und 3 Tage bei Raumtemperatur getrocknet. Drei Prüfkörper (150x240 mm$^2$) wurden in Auftragsrichtung ausgeschnitten und bei 23°C für mindestens 16 h thermostatiert. Bei dieser Temperatur wurde auch der Test durchgeführt. Die Probe wurde derart auf dem Messtisch angebracht, dass die Auftragungsrichtung der Beschichtung mit der Bewegungsrichtung des Schlittens übereinstimmt. Der Schlitten besteht aus Edelstahl. Das Gewicht des Schlittens betrug 1,00 kg. Der Schlitten wurde dann mit einer konstanten Geschwindigkeit (127 mm/min) über den Tisch gezogen. Der zeitliche Verlauf der Kraft wurde aufgezeichnet. Die mittlere Kraft die zur Bewegung des Schlittens erforderlich ist wurde wie in Absatz 9.2 der ISO 8295:1995 beschrieben bestimmt. Der dynamische Reibungskoeffizient wurde dann wie in ISO 8295:1995 beschrieben als

$$\mu_R = \frac{F_f}{w \cdot g}$$

wobei $F_f$ die dynamische Reibungskraft in Newton darstellt, w das Gewicht des Schlittens in Kilogramm und g die Gravitationskonstante 9,81 m$^2$/s darstellt, berechnet.

BEISPIELE:

Verwendete Stoffe:

Bindemittel:

Wässrige Dispersion basierend auf einem Copolymer aus Acryl- und Methacrylsäureestern aufweisend einen Festkörperanteil von 46 Gew.% eine Brookfieldviskosität von ca. 7000 mPa•s nach DIN EN ISO 2555 (Spindel 4; 20 Upm; 23°C), erhältlich als Mowilith LDM 7724 von Celanese verwendet.

Titandioxid, mittlere Teilchengröße = 0,25 μm (Beispiel für PF1)
Calciumcarbonat, mittlere Teilchengröße = 2,5 μm (Beispiel für PF2)
Schichtsilikat, mittlere Teilchengröße = 25 μm (Beispiel für PF3)
Cristobalite, mittlere Teilchengröße = 14 μm (Beispiel für PF3)

Hohlglaskugeln:

mittlere Teilchengröße = 50μm

Wachs:

Polyethylenwachs mit einem Schmelzbereich von 91 bis 99 °C, einer Dichte von 1,00 g/cm$^3$ und einer Viskosität von 25 - 50 mPa·s (DIN 53019 1.921s-1). Dispersion mit einem Feststoffanteil von 35 Gew.%

Silikonöl

Alkoxygruppenfreies Dimethylpolysiloxan aufweisend eine Viskosität von 90 mm$^2$/s und einem Molekulargewicht von 6100 g/mol.

Die folgenden Zusammensetzungen wurden hergestellt.

R1: Rezeptur II aus EP 0 546 421 (hydrophobe Fassadenfarbe mit einer PVK von ca. 80 %)

R2: Handelsübliche hydrophile Dispersionssilikatfarbe mit einer PVK von ca. 82 %)

Alle Angaben in Gewichtsprozent

| Tabelle 2 | EG1 | EG2 | EG3 | EG4 | EG5 | A1 | A2 | A3 |
|---|---|---|---|---|---|---|---|---|
| Wasser | 13 | 14 | 4 | 20 | 31 | 19 | 14,5 | 17 |
| Bindemittel | 40 | 40 | 49 | 33 | 22 | 40 | 40 | 40 |
| Wachs | 5,0 | 5,0 | 5,0 | 5,0 | 5,0 | --- | 5,0 | 5,0 |
| Silikonöl | 0,5 | 0,5 | 0,5 | 0,5 | 0,5 | 0,5 | --- | 0,5 |
| $TiO_2$ | 16 | 16 | 16 | 16 | 16 | 16 | 16 | 16 |
| $CaCO_3$ | 10 | 10 | 10 | 10 | 10 | 10 | 10 | --- |
| Schichtsilikat | 9 | 9 | 9 | 9 | 9 | 9 | 9 | --- |
| Cristobalit | --- | --- | --- | --- | --- | --- | --- | 16 |
| Hohlglaskugeln | 1,0 | --- | 1,0 | 1,0 | 1,0 | --- | --- | --- |
| Additive[1] | 5,5 | 5,5 | 5,5 | 5,5 | 5,5 | 5,5 | 5,5 | 5,5 |
| PVK [ca. %] | 45 | 36 | 40 | 50 | 60 | 36 | 36 | 36 |
| Kontaktwinkel Wasser [°] | 87,3 | 85,9 | 82,8 | 85,2 | 84,7 | 85,9 | 78,5 | 80,1 |
| Kontaktwinkel Diiodmethan [°] | 57,7 | 58,3 | 58,3 | 63,7 | 59,6 | 56,1 | 66,8 | 61,6 |
| OFE[2] | 33,02 | 33,18 | 34,31 | 31,15 | 33,07 | 34,17 | 32,89 | 34,06 |
| DA[2] | 29,92 | 29,55 | 29,54 | 26,46 | 28,83 | 30,83 | 24,70 | 27,63 |
| PA[2] | 3,11 | 3,63 | 4,77 | 4,68 | 4,25 | 3,34 | 8,19 | 6,44 |
| µR | 0,17 | 0,12 | 0,16 | 0,14 | 0,18 | 0,17 | 0,17 | 0,17 |

| Tabelle 2 | B1 | C1 | R1 | R2 |
|---|---|---|---|---|
| Wasser | 19,5 | 18,5 | | |
| Bindemittel | 40 | 40 | | |
| Wachs | --- | --- | | |
| Silikonöl | --- | --- | | |
| $TiO_2$ | 16 | 16 | | |
| $CaCO_3$ | 10 | 10 | | |
| Schichtsilikat | 9 | 9 | | |
| Cristobalit | --- | --- | | |
| Hohlglaskugeln | --- | 1,0 | | |
| Additive[1] | 5,5 | 5,5 | | |
| PVK [ca. %] | 36 | 45 | | |
| Kontaktwinkel Wasser [°] | 74,1 | 75,4 | 122,2 | 50,1 |
| Kontaktwinkel Diiodmethan [°] | 64,0 | 62,1 | 85,1 | 26,6 |
| OFE[2] | 36,11 | 36,16 | 14,98 | 61,42 |
| DA[2] | 26,25 | 27,38 | 14,96 | 45,92 |
| PA[2] | 9,86 | 8,78 | 0,02 | 15,51 |
| µR | 0,30 | 0,35 | 0,17 | 0,25 |

[1]	insbesondere Dispergiermittel, Verdicker, Entschäumer, Biozide

[2]	Einheit [mN/m]

EG = erfindungsgemäß, A, B, C = Referenz

Durch die erfindungsgemäße Füllstoffkombination wird der Reibungskoeffizient deutlich abgesenkt wie aus dem Vergleich von EG2 (0,12) und A3 (0,17) ersichtlich. Zudem wird der polare Anteil der Oberflächenenergie durch die erfindungsgemäße Pigment-/Füllstoffkombination um fast die Hälfte herabgesetzt. Beide Zusammensetzungen weisen dieselbe PVK (36) auf und haben denselben Bindemittelanteil. Sie unterscheiden sich lediglich dadurch, dass EG2 die erfindungsgemäße Pigment-/Füllstoffkombination enthält und A3 nicht.

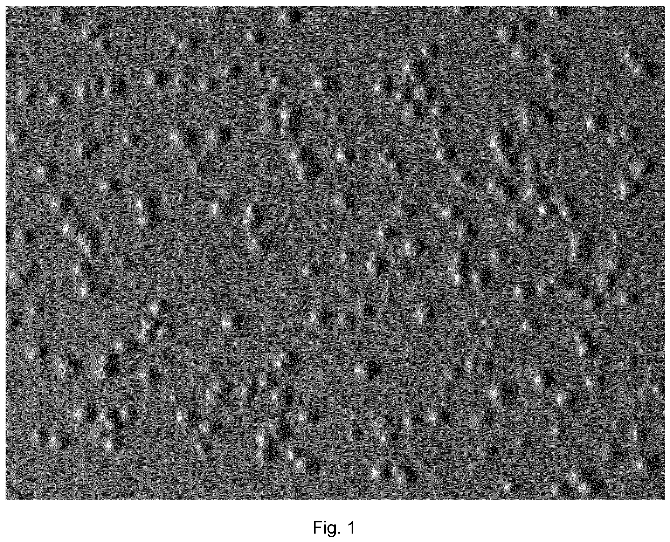

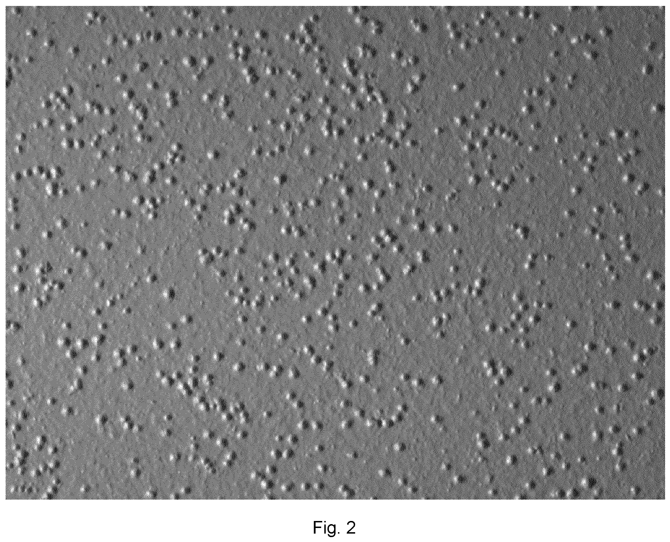

Die Verwendung von Glaskugeln (EG1/EG3/EG4/EG5) erhöht zwar den Reibungskoeffizienten. Die Glaskugeln erzeugen jedoch eine Mikrostruktur auf der Oberfläche wie aus Fig. 1 und Fig.2 ersichtlich. Auf glatten Oberflächen läuft abfließendes Wasser häufig über einige wenige Bahnen ab. Hier kann es zu Ablagerungen entlang dieser Bahnen kommen. Durch eine, mittels Glaskugeln erzeugten, Mikrostruktur wird ablaufendes Wasser in unterschiedliche Bahnen gelenkt, wodurch derartige Ablagerungen deutlich reduziert werden können.

Die Rücktrocknung der erfindungsgemäßen Zusammensetzungen wurde anhand der folgenden Versuche bestimmt.

Hierzu wurden Aufzüge mit einer Nassschichtstärke von 200 μm Dicke auf Lenetta-Folie erstellt und 2 Tage bei Raumtemperatur getrocknet. Die Oberfläche betrug 414 cm$^2$.

Die beschichtete Lenetta-Folie wurde schwebend aufgehängt und tariert. Anschließend aus einer Entfernung mit ca. 35 cm destilliertem Wasser in einer Menge von ca. 85 g/m$^2$ aufgesprüht. Die Rücktrocknung wurde 30 min beobachtet und alle 5 min das Gewicht festgehalten. Die Prüfung wurde bei Normklima 23°C/50% rel. Feuchte durchgeführt

| | R1 | | EG 1 mit HGK | | EG 2 ohne HGK | | R2 | |
|---|---|---|---|---|---|---|---|---|
| | [g] | [%] | [g] | [%] | [g] | [%] | [g] | [%] |
| Start | 3,71 | 100,0 | 3,64 | 100,0 | 3,75 | 100,0 | 3,51 | 100,0 |
| 5' | 3,29 | 88,7 | 2,21 | 60,7 | 2,1 | 56,0 | 2,20 | 62,7 |
| 10' | 2,82 | 76,0 | 1,52 | 41,8 | 1,39 | 37,1 | 1,74 | 49,6 |
| 15' | 2,34 | 63,1 | 1,01 | 27,7 | 0,96 | 25,6 | 1,25 | 35,6 |
| 20' | 1,91 | 51,5 | 0,65 | 17,9 | 0,56 | 14,9 | 0,91 | 25,9 |
| 25' | 1,45 | 39,1 | 0,36 | 9,9 | 0,27 | 7,2 | 0,57 | 16,2 |
| 30' | 1,05 | 28,3 | 0,14 | 3,8 | 0,1 | 2,7 | 0,30 | 8,5 |
| HGK = Hohlglaskugeln | | | | | | | | |

Wie die obige Tabelle zeigt ist sowohl das Rücktrocknungsverhalten der erfindungsgemäßen Zusammensetzungen deutlich verbessert. Bereits die Anfangstrocknungsgeschwindigkeit ist deutlich erhöht wie an den Werten bei 5 und 10 Minuten erkennbar. Darüber hinaus ist außerdem die verbleibende Wassermenge nach 30 Minuten deutlich veringert.

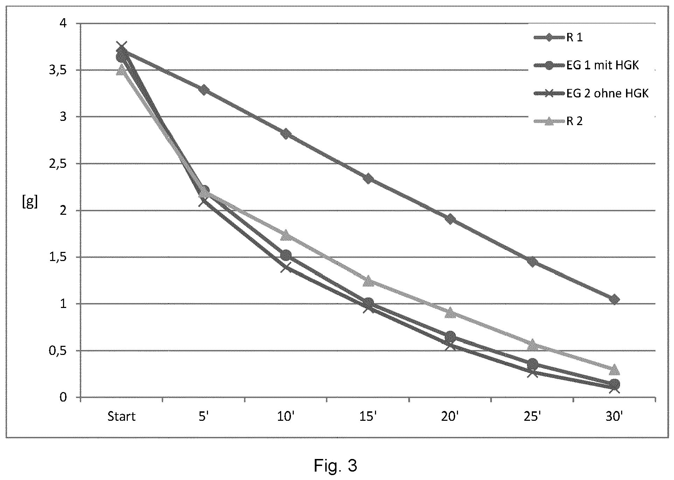

Der zeitliche Verlauf der auf oder in der Oberfläche verbleibenden Wassermenge ist in Abbildungen 3 (Gewicht/Zeit) und 4 (Gew.%/Zeit) dargestellt

**Patentansprüche**

1. Zusammensetzung enthaltend

   - ein Wachs (W)
   - ein Silikonöl (S)
   - ein Bindemittel (B)
   - ein oder mehrere Pigment(e) und/oder Füllstoff(e) (PF1) aufweisend eine mittlere Teilchengröße von 0,1 bis 1,0 μm in einer Gesamtmenge von 8,0 bis 55 Gew.%;
   - ein oder mehrere Pigment(e) und/oder Füllstoff(e) (PF2) aufweisend eine mittlere Teilchengröße von größer als 1,0 bis 10 μm in einer Gesamtmenge von 5,0 bis 40 Gew.%;
   - ein oder mehrere Pigment(e) und/oder Füllstoff(e) (PF3) aufweisend eine mittlere Teilchengröße von größer als 10 bis 40 μm in einer Gesamtmenge von 3,0 bis 30 Gew.%;
   jeweils bezogen auf den Feststoffanteil der Zusammensetzung
   wobei
   - PF1, PF2 und PF3 unterschiedlich sind.

2. Die Zusammensetzung gemäß Anspruch 1, aufweisend eine Pigment-Volumen-Konzentration gemäß EN ISO 4618-1 von 20 % bis 65 %.

3. Die Zusammensetzung gemäß einem der vorangegangenen Ansprüche, ferner enthaltend einen strukturgebenden Füllstoff.

4. Die Zusammensetzung gemäß Anspruch 3 wobei der strukturgebende Füllstoff eine mittlere Teilchengröße von größer als 40 μm aufweist.

5. Die Zusammensetzung gemäß Anspruch 3 oder 4 wobei der Anteil an strukturgebenden Füllstoff bezogen auf den Feststoffanteil der Zusammensetzung 0,10 bis 3,0 Gew.-% beträgt.

6. Die Zusammensetzung gemäß einem der vorangegangenen Ansprüche, wobei die folgende Relation (I) erfüllt ist.

$$1,5 \cdot \text{mittlere Teilchengröße(PF1)}$$
$$< \text{mittlere Teilchengröße(PF2)} <$$
$$50 \cdot \text{mittlere Teilchengröße(PF1)} \qquad (I)$$

7. Die Zusammensetzung gemäß einem der vorangegangenen Ansprüche, wobei die folgende Relation (II) erfüllt ist.

$$1,5 \cdot \text{mittlere Teilchengröße(PF2)}$$
$$< \text{mittlere Teilchengröße(PF3)} <$$
$$40 \cdot \text{mittlere Teilchengröße(PF2)} \qquad (II)$$

8. Die Zusammensetzung gemäß einem der vorangegangenen Ansprüche, wobei der Gewichtsanteil an Pigment(en) und/oder Füllstoff(en) aufweisend eine mittlere Teilchengröße von 0,10 bis 1,0 $\mu$m größer als der Gewichtsanteil an Pigment(en) und/oder Füllstoff(en) aufweisend eine mittlere Teilchengröße von größer als 1,0 bis 10 $\mu$m ist und/oder, der Gewichtsanteil an Pigment(en) und/oder Füllstoff(en) aufweisend eine mittlere Teilchengröße von größer als 1,0 bis 10 $\mu$m größer als der Gewichtsanteil an Pigment(en) und/oder Füllstoff(en) aufweisend eine mittlere Teilchengröße von größer als 10 bis 40 $\mu$m ist, jeweils bezogen auf den Feststoffanteil der Zusammensetzung.

9. Die Zusammensetzung einem der vorangegangenen Ansprüche, wobei das Wachs einen statischen Anfangskontaktwinkel von Wasser nach 1 min Äquilibrieren aufweist, der größer ist als der statische Anfangskontaktwinkel von Wasser des Bindemittels nach 1 min Äquilibrieren.

10. Die Zusammensetzung gemäß Anspruch 3, wobei das Wachs einen statischen Anfangskontaktwinkel von Wasser nach 1 min Äquilibrieren aufweist, der mindestens 5° höher ist als der statische Anfangskontaktwinkel von Wasser des Bindemittels nach 1 min Äquilibrieren.

11. Die Zusammensetzung gemäß einem der vorangegangenen Ansprüche, wobei die Zusammensetzung eine Form- oder Beschichtungsmasse ist.

12. Die Zusammensetzung gemäß Anspruch 11 wobei die Zusammensetzung ein Anstrichmittel oder Putz ist.

13. Beschichtung auf einer Substratoberfläche, die Beschichtung enthaltend

- ein Wachs (W)
- ein Silikonöl (S)
- ein Bindemittel (B)
- ein oder mehrere Pigment(e) und/oder Füllstoff(e) (PF1) aufweisend eine mittlere Teilchengröße von 0,1 bis 1,0 $\mu$m in einer Gesamtmenge von 8,0 bis 55 Gew.%;
- ein oder mehrere Pigment(e) und/oder Füllstoff(e) (PF2) aufweisend eine mittlere Teilchengröße von größer als 1,0 bis 10 $\mu$m in einer Gesamtmenge von 5,0 bis 40 Gew.%;
- ein oder mehrere Pigment(e) und/oder Füllstoff(e) (PF3) aufweisend eine mittlere Teilchengröße von größer als 10 bis 40 $\mu$m in einer Gesamtmenge von 3,0 bis 30 Gew.%;
jeweils bezogen auf den Feststoffanteil der Zusammensetzung
wobei
- PF1, PF2 und PF3 unterschiedlich sind.

14. Verwendung einer Zusammensetzung nach einem der Ansprüche 1 bis 10 als Form- oder Beschichtungsmasse.

15. Verwendung nach Anspruch 14 wobei die Form- oder Beschichtungsmasse ein Anstrichmittel oder Putz ist.

Fig. 1

Fig. 2

Fig. 3

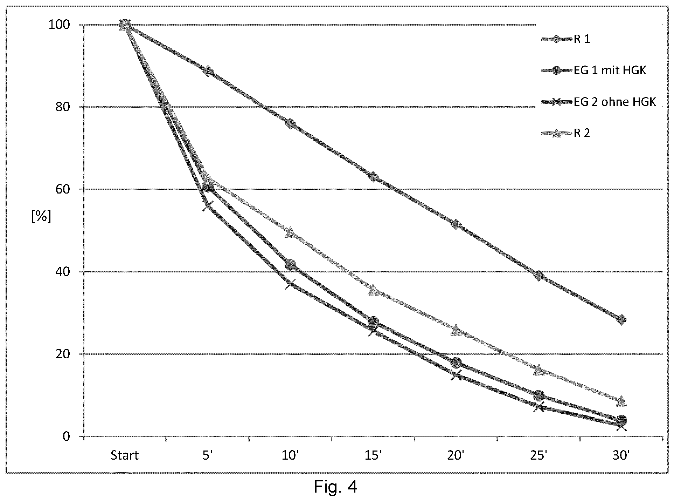

Fig. 4

**EP 3 686 173 A1**

Europäisches Patentamt
European Patent Office
Office européen des brevets

# EUROPÄISCHER RECHERCHENBERICHT

Nummer der Anmeldung

EP 20 16 2009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/153944 A1 (CHENG HUNG-CHIAO [TW] ET AL) 26. Juni 2008 (2008-06-26) * Absätze [0008] - [0011] * * Absätze [0032] - [0041] * ----- | 1-15 | INV. C04B26/06 C04B20/00 C04B41/48 |
| X | WO 00/39049 A1 (ISPO GMBH [DE]; BORN ANDREA [DE]; WINK REINHARDT [DE]; ERMUTH JOSEF [D] 6. Juli 2000 (2000-07-06) * das ganze Dokument * ----- | 1-15 | ADD. C04B111/20 |
| A | DE 10 2006 046860 A1 (CELANESE EMULSIONS GMBH [DE]) 3. April 2008 (2008-04-03) * das ganze Dokument * ----- | 1-15 | |
| A,D | EP 0 546 421 A1 (BAYER AG [DE]) 16. Juni 1993 (1993-06-16) * das ganze Dokument * ----- | 1-15 | |

RECHERCHIERTE SACHGEBIETE (IPC)

C04B
C09D

Der vorliegende Recherchenbericht wurde für alle Patentansprüche erstellt

| Recherchenort | Abschlußdatum der Recherche | Prüfer |
|---|---|---|
| München | 22. Juni 2020 | Gattinger, Irene |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

23

**ANHANG ZUM EUROPÄISCHEN RECHERCHENBERICHT
ÜBER DIE EUROPÄISCHE PATENTANMELDUNG NR.**

EP 20 16 2009

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-06-2020

| Im Recherchenbericht angeführtes Patentdokument | Datum der Veröffentlichung | Mitglied(er) der Patentfamilie | Datum der Veröffentlichung |
|---|---|---|---|
| US 2008153944 A1 | 26-06-2008 | TW 200827415 A<br>US 2008153944 A1 | 01-07-2008<br>26-06-2008 |
| WO 0039049 A1 | 06-07-2000 | AT 252524 T<br>AU 2533200 A<br>CZ 20012181 A3<br>DE 29923249 U1<br>DE 29923250 U1<br>DK 1144332 T3<br>EP 1144332 A1<br>ES 2211223 T3<br>HU 0104683 A2<br>PL 348459 A1<br>PT 1144332 E<br>SK 8852001 A3<br>US 6919398 B1<br>WO 0039049 A1 | 15-11-2003<br>31-07-2000<br>17-07-2002<br>07-09-2000<br>31-08-2000<br>23-02-2004<br>17-10-2001<br>01-07-2004<br>28-11-2002<br>20-05-2002<br>31-03-2004<br>05-02-2002<br>19-07-2005<br>06-07-2000 |
| DE 102006046860 A1 | 03-04-2008 | AT 488558 T<br>CN 101522834 A<br>DE 102006046860 A1<br>DK 2059571 T3<br>EP 2059571 A1<br>ES 2354742 T3<br>PL 2059571 T3<br>US 2010144925 A1<br>WO 2008040464 A1 | 15-12-2010<br>02-09-2009<br>03-04-2008<br>21-02-2011<br>20-05-2009<br>17-03-2011<br>29-04-2011<br>10-06-2010<br>10-04-2008 |
| EP 0546421 A1 | 16-06-1993 | AT 116670 T<br>CZ 287576 B6<br>DE 4140733 A1<br>DE 59201149 D1<br>DK 0546421 T3<br>EP 0546421 A1<br>ES 2067288 T3<br>HU 212052 B<br>SK 362292 A3<br>US 5356463 A | 15-01-1995<br>13-12-2000<br>24-06-1993<br>16-02-1995<br>06-06-1995<br>16-06-1993<br>16-03-1995<br>29-01-1996<br>10-05-1995<br>18-10-1994 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0546421 A